# EUROPEAN PATENT APPLICATION

(11) **EP 4 814 870 A1**
(43) Date of publication of application: **30.09.2026**
(21) Application number: 24893109.9
(22) Date of filing: 21.10.2024
(51) Int. Cl.: G06T 7/50

(54) **CT IMAGE RECONSTRUCTION METHOD, APPARATUS, AND SYSTEM, AND STORAGE MEDIUM**

(30) Priority: 23.11.2023 CN 202311572096; 26.03.2024 CN 202410353676
(71) Applicant: Tsinghua University, Haidian District Beijing 100084 (CN); NUCTECH COMPANY LIMITED, Beijing 100084 (CN)
(72) Inventor: LI, Yuanjing, Beijing 100084 (CN); ZHANG, Li, Beijing 100084 (CN); ZHANG, Jian, Beijing 100084 (CN); YI, Xi, Beijing 100084 (CN); LIU, Bicheng, Beijing 100084 (CN); WANG, Dongyu, Beijing 100084 (CN); NI, Xiulin, Beijing 100084 (CN); LI, Liang, Beijing 100084 (CN); SUN, Shangmin, Beijing 100084 (CN); ZONG, Chunguang, Beijing 100084 (CN)
(74) Representative: Gunzelmann, Rainer
(86) International application number: PCT/CN2024/126061
(87) International publication number: WO 2025/107950

(57) **Abstract**

The present disclosure provides a CT image reconstruction method, apparatus, and system, and a storage medium. The CT image reconstruction method comprises: acquiring coordinate values of N target points on a target object at a specified moment, N being a natural number greater than 1, and the target object being an object undergoing CT scanning in a CT scanning device; by using the coordinate values of the N target points at the specified moment and coordinate values of the center of rotation of the CT scanning device, determining a deflection angle of the target object; by using the deflection angle and the coordinate values of the center of rotation, correcting coordinate values of each point in a current scanning area of the target object, so as to obtain corrected coordinate values of each point; and, by using the corrected coordinate values of each point and projection data acquired at the specified moment, obtaining a reconstructed CT image.

## Description

### CROSS-REFERENCE TO RELATED APPLICATIONS

The present disclosure is based on and claims priority of Chinese application for invention No. 202311572096.4, filed on November 23, 2023, and Chinese application for invention No. 202410353676.2, filed on March 26, 2024, the disclosure of hereby incorporated into this disclosure by reference in its entirety

### TECHNICAL FIELD

The present disclosure relates to the technical field of CT detection, and particularly to a CT image reconstruction method, a CT image reconstruction apparatus, a CT image reconstruction system, and a storage medium.

### BACKGROUND

X-ray inspection technology offers clear images, strong readability, high real-time performance, and low labor costs, making it a common method in rapid non-destructive detection applications. In particular, CT (Computed Tomography) technology-based tomographic scanning and imaging, which reconstructs internal structures by capturing projection images of objects from different angles, excels in detecting structural differences, voids, looseness, wrinkles, and other defects.

For a large-sized object, since it is difficult to perform CT scanning by self-rotation of the object, a scanning device is employed to rotate and the object is empolyed to translate for CT scanning. The object is moved through a scanning channel by a movable component, translating a part to be scanned to an irradiation area of the rays. The scanning device rotates the X-ray source and detector to acquire the image information required for CT reconstruction.

### SUMMARY

According to a first aspect of the embodiments of the present disclosure, a CT image reconstruction method is provided, comprising: obtaining coordinate values of N target points on a target object at a specified time, wherein N is a natural number greater than 1, and the target object is an object for CT scanning in a CT scanning device; determining a deflection angle of the target object by using the coordinate values of the N target points at the specified time and a coordinate value of a rotation center of the CT scanning device; correcting a coordinate value of each point on the target object in a current scanning region by using the deflection angle and the coordinate value of the rotation center to obtain corrected coordinate value of the each point; and obtaining a reconstructed CT image by using the corrected coordinate value of the each point and projection data acquired at the specified time.

In some embodiments, the determining the deflection angle of the target object comprises: obtaining the deflection angle of the target object by using coordinate values of two target points on the target object at the specified time and the coordinate value of the rotation center in a case where N is equal to 2.

In some embodiments, the deflection angle of the target object is an average value of a first angle parameter and a second angle parameter, wherein the first angle parameter is determined by an x-axis coordinate value and a y-axis coordinate value of a coordinate value of a first target point of the two target points at the specified time and an x-axis coordinate value and a y-axis coordinate value of the coordinate value of the rotation center, and the second angle parameter is determined by an x-axis coordinate value and a y-axis coordinate value of a coordinate value of a second target point of the two target points at the specified time and the x-axis coordinate value and the y-axis coordinate value of the coordinate value of the rotation center.

In some embodiments, the first angle parameter is an arctangent function value of a ratio of a first difference value to a second difference value, wherein the first difference value is a difference value between the y-axis coordinate value of the coordinate value of the first target point at the specified time and the y-axis coordinate value of the coordinate value of the rotation center, and the second difference value is a difference value between the x-axis coordinate value of the coordinate value of the first target point at the specified time and the x-axis coordinate value of the coordinate value of the rotation center; and the second angle parameter is an arctangent function value of a ratio of a third difference value to a fourth difference value, wherein the third difference value is a difference value between the y-axis coordinate value of the coordinate value of the second target point at the specified time and the y-axis coordinate value of the coordinate value of the rotation center, and the fourth difference value is a difference value between the x-axis coordinate value of the coordinate value of the second target point at the specified time and the x-axis coordinate value of the coordinate value of the rotation center.

In some embodiments, the determining the deflection angle of the target object comprises: generating K mutually distinct sets from the N target points in a case where N is greater than 2, wherein K is a natural number greater than 1, and each set of the sets comprises two target points among the N target points; obtaining an i-th deflection angle by using coordinate values of two target points in an i-th set at the specified time and the coordinate value of the rotation center of the CT scanning device, where 1 ≤ i ≤ K; and generating the deflection angle of the target object by using obtained K deflection angles.

In some embodiments, the i-th deflection angle is an average value of a third angle parameter and a fourth angle parameter, wherein the third angle parameter is determined by an x-axis coordinate value and a y-axis coordinate value of a coordinate value of a first target point in the i-th set at the specified time and an x-axis coordinate value and a y-axis coordinate value of the coordinate value of the rotation center, and the fourth angle parameter is determined by an x-axis coordinate value and a y-axis coordinate value of a coordinate value of a second target point in the i-th set at the specified time and the x-axis coordinate value and the y-axis coordinate value of the coordinate value of the rotation center.

In some embodiments, the third angle parameter is an arctangent function value of a ratio of a fifth difference value to a sixth difference value, wherein the fifth difference value is a difference value between the y-axis coordinate value of the coordinate value of the first target point at the specified time and the y-axis coordinate value of the coordinate value of the rotation center, and the sixth difference value is a difference value between the x-axis coordinate value of the coordinate value of the first target point at the specified time and the x-axis coordinate value of the coordinate value of the rotation center; and the fourth angle parameter is an arctangent function value of a ratio of a seventh difference value to an eighth difference value, wherein the seventh difference value is a difference value between the y-axis coordinate value of the coordinate value of the second target point at the specified time and the y-axis coordinate value of the coordinate value of the rotation center, and the eighth difference value is a difference value between the x-axis coordinate value of the coordinate value of the second target point at the specified time and the x-axis coordinate value of the coordinate value of the rotation center.

In some embodiments, the deflection angle of the target object is an average value of the K deflection angles, or a median value of the K deflection angles.

In some embodiments, an x-axis coordinate value of the corrected coordinate value of the each point is determined by a difference value between a first correction parameter and a second correction parameter, wherein the first correction parameter is determined by an x-axis coordinate value of the coordinate value of the each point, an x-axis coordinate value of the coordinate value of the rotation center and a cosine value of the deflection angle, and the second correction parameter is determined by a y-axis coordinate value of the coordinate value of the each point, a y-axis coordinate value of the coordinate value of the rotation center and a sine value of the deflection angle; and a y-axis coordinate value of the corrected coordinate value of the each point is determined by a sum value of a third correction parameter and a fourth correction parameter, wherein the third correction parameter is determined by the x-axis coordinate value of the coordinate value of the each point, the x-axis coordinate value of the coordinate value of the rotation center and the sine value of the deflection angle, and the fourth correction parameter is determined by the y-axis coordinate value of the coordinate value of the each point, the y-axis coordinate value of the coordinate value of the rotation center and the cosine value of the deflection angle.

In some embodiments, the first correction parameter is a product value of a difference value between the x-axis coordinate value of the coordinate value of the each point and the x-axis coordinate value of the coordinate value of the rotation center and the cosine value of the deflection angle; the second correction parameter is a product value of a difference value between the y-axis coordinate value of the coordinate value of the each point and the y-axis coordinate value of the coordinate value of the rotation center and the sine value of the deflection angle; the third correction parameter is a product value of the difference value between the x-axis coordinate value of the coordinate value of the each point and the x-axis coordinate value of the coordinate value of the rotation center and the sine value of the deflection angle; and the fourth correction parameter is a product value of the difference value between the y-axis coordinate value of the coordinate value of the each point and the y-axis coordinate value of the coordinate value of the rotation center and the cosine value of the deflection angle.

In some embodiments, a coordinate value of an n-th target point of the N target points at the specified time are determined by a coordinate value of an n-th position monitoring apparatus corresponding to the n-th target point, a distance between the n-th position monitoring apparatus and the n-th target point at the specified time, and an angle between a line connecting the n-th position monitoring apparatus and the n-th target point and a y-axis at the specified time, wherein there is a one-to-one correspondence between the N target points and N position monitoring apparaturs, and 1 ≤ n ≤ N.

In some embodiments, a y-axis coordinate value of the coordinate value of the n-th target point at the specified time is a difference value between a y-axis coordinate value of the coordinate value of the n-th position monitoring apparatus and a first product, wherein the first product being a product of the distance and a cosine value of the angle.

In some embodiments, an x-axis coordinate value of the coordinate value of the n-th target point at the specified time is a sum value of an x-axis coordinate value of the coordinate value of the n-th position monitoring apparatus and a second product in a case where the x-axis coordinate value of the coordinate value of the n-th position monitoring apparatus is less than 0 or equal to 0, wherein the second product value being a product value of the distance and a sine value of the angle.

In some embodiments, the x-axis coordinate value of the coordinate value of the n-th target point at the specified time is a difference value between the x-axis coordinate value of the coordinate value of the n-th position monitoring apparatus and the second product in a case where the x-axis coordinate value of the coordinate value of the n-th position monitoring apparatus is greater than 0 or equal to 0.

According to a second aspect of the embodiments of the present disclosure, a CT image reconstruction apparatus is provided, comprising: a first processing module configured to obtain coordinate values of N target points on a target object at a specified time, wherein N is a natural number greater than 1, and the target object is an object for CT scanning in a CT scanning device; a second processing module configured to determine a deflection angle of the target object by using the coordinate values of the N target points at the specified time and a coordinate value of a rotation center of the CT scanning device; a third processing module configured to correct a coordinate value of each point on the target object in a current scanning region by using the deflection angle and the coordinate value of the rotation center to obtain corrected coordinate value of the each point; and a fourth processing module configured to obtain a reconstructed CT image by using the corrected coordinate value of the each point and projection data acquired at the specified time.

According to a third aspect of the embodiments of the present disclosure, a CT image reconstruction apparatus is provided, comprising: a processor; and a memory coupled to the processor, storing program instructions which, when executed by the processor, cause the processor to execute the CT image reconstruction method mentioned above.

According to a fourth aspect of the embodiments of the present disclosure, a CT image reconstruction system is provided, comprising: the CT image reconstruction apparatus mentioned above; a CT scanning device configured to perform CT scanning on a target object to acquire projection data, and send the projection data to the CT image reconstruction apparatus; and N position monitoring apparatuses one-to-one corresponding to N target points on the target object, wherein N is a natural number greater than 1, and each position monitoring apparatus is configured to detect a distance between the each position monitoring apparatus and a corresponding target point at a specified time and an angle between a line connecting the each position monitoring apparatus and the corresponding target point and a y-axis.

According to a fifth aspect of the embodiments of the present disclosure, a computer-readable storage medium is provided, which stores computer instructions that, when executed by a processor, implement the CT image reconstruction method described in any of the embodiments above.

According to a sixth aspect of the embodiments of the present disclosure, a computer program product is provided, comprising computer instructions that, when executed by a processor, implement the CT image reconstruction method described in any of the embodiments above.

According to a seventh aspect of the embodiments of the present disclosure, a computer program is provided, comprising computer instructions that, when executed by a processor, implement the CT image reconstruction method described in any of the embodiments above.

Detailed description on exemplary embodiments of the present disclosure will be given below with reference to the drawings, by which other features and advantages of the present disclosure will become clear.

### BRIEF DESCRIPTION OF THE DRAWINGS

The accompanying drawings, which are included to provide a further understanding of this disclosure and are incorporated in and constitute a part of this disclosure, illustrate embodiments of this disclosure, and together with the illustrative embodiments of the present disclosure serve to explain the present disclosure, but are not limitation thereof.
FIG. 1 is a side view of CT scanning for a large object according to one embodiment of the present disclosure;
FIG. 2 is a front view of CT scanning for a large object according to one embodiment of the present disclosure;
FIG. 3 is a flowchart of a CT image reconstruction method according to one embodiment of the present disclosure;
FIG. 4 is a front view of CT scanning for a large object according to another embodiment of the present disclosure;
FIG. 5 is a front view of CT scanning for a large object according to still another embodiment of the present disclosure;
FIG. 6 is a structural diagram of a CT image reconstruction apparatus according to one embodiment of the present disclosure;
FIG. 7 is a structural diagram of a CT image reconstruction apparatus according to another embodiment of the present disclosure; and
FIG. 8 is a structural diagram of a CT image reconstruction system according to one embodiment of the present disclosure.

### DETAILED DESCRIPTION

The technical solutions in the embodiments of this disclosure will be described clearly and completely with reference to the drawings in the embodiments of this disclosure. Apparently, the described embodiments are only some, not all, of the embodiments of this disclosure. Description on at least one embodiment below is only illustrative and shall by no means limit this disclosure or its application or usage. All other embodiments obtained by those of ordinary skill in the art based on the embodiments of this disclosure without creative effort shall fall within the protection scope of this disclosure.

Unless otherwise specified, the relative arrangement of components and steps, numerical expressions, and numerical values set forth in these embodiments do not limit the scope of this disclosure.

At the same time, it should be understood that the dimensions of the various parts shown in the drawings are not drawn to scale for ease of description.

Techniques, methods, and devices known to those of ordinary skill in the relevant art may not be discussed in detail but are intended to be part of the granted specification where appropriate.

In all examples shown and discussed herein, any specific values should be construed as merely illustrative and not as limitations. Thus, other examples of the exemplary embodiments may have different values.

It should be noted that similar reference numerals and letters denote similar items in the following drawings, and therefore, once an item is defined in one figure, it need not be further discussed in subsequent figures.

The inventors found that large objects may shift within a scanning channel, thereby affecting the image effect of the scanned part. For example, a wind turbine blade, which is long (typically 50 meters to over 100 meters in length) but has low overall density (hollow inside with shell of a composite material, having a density below 2g/cm³), is prone to positional shifts during scanning due to vibrations from other parts. This can lead to distorted CT scanning data at certain angles, severely impacting image reconstruction and defect detection of internal structures of the blade.

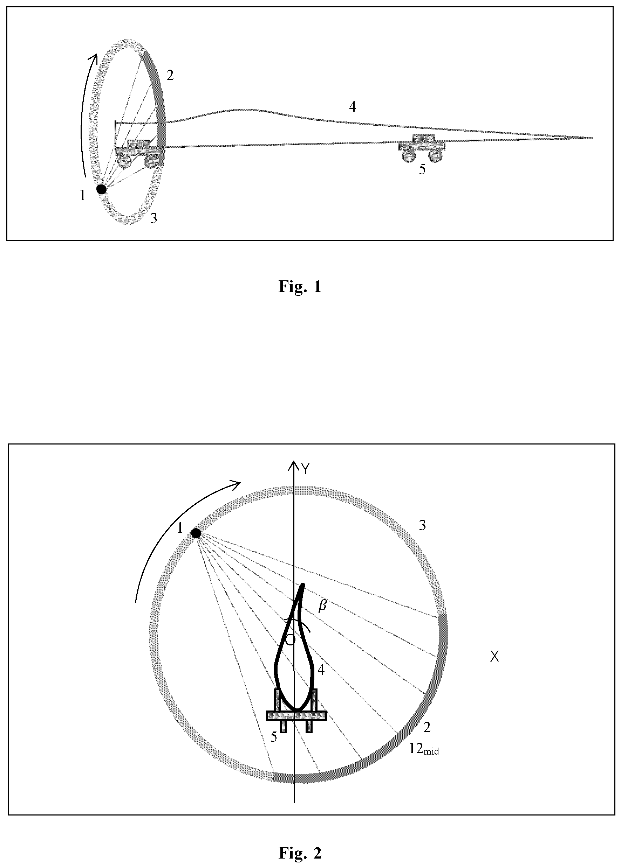

For instance, the side view and the front view of CT scanning for a large object by using a CT scanning device are shown in FIG. 1 and FIG. 2, respectively.

In FIG. 1 and FIG. 2, an X-ray source 1 is mounted on a rotating bracket 3, and provides X-rays of appropriate energy and dosage to penetrate an object 4, and a degree of identification on different materials achieves a requirement on defect detection. The X-ray source may be an X-ray machine or an accelerator.

A detector 2 is mounted on an opposite side of the X-ray source 1 on the rotating bracket 3, receives rays that have transmitted the object 4 and converts them into digital signals for data processing and image reconstruction. Generally, a fan-shaped beam from the X-ray source 1 to the detector 2 should fully cover the object being inspected. The detector 2 may be in single-row or multi-row.

The rotating bracket 3 carries the X-ray source 1 and the detector 2, enabling synchronized rotation thereof to acquire projection data from sufficient angles. The rotating bracket 3 must ensure sufficient end-face and radial stability to keep a scanning trajectory of the fan-shaped beam within a planar circle.

A carrier device 5 is used to carry an object and move through a scanning channel. At the time of tomographic CT scanning or cone-beam CT scanning, the carrier device 5 drags the object to a specified position and stops, while the rotating bracket 3 drives the X-ray source 1 and detector 2 to rotate synchronously to collect data from multiple angles within a fault of the object. Upon completion of collection at a current position, the carrier device 5 drags the object to a next position, the above process is repeated. At the time of spiral CT scanning, the rotating bracket 3 rotates the X-ray source 1 and detector 2 while the carrier device 5 drags the object to move at a uniform speed within the scanning channel, thereby collecting spiral projection images of the object.

Additionally, the CT scanning device is further provided with a data processing system and an image reconstruction system. The data processing system receives data collected by the detector and integrates relevant information required for image reconstruction to generate projection image data. The image reconstruction system processes the projection images to generate two-dimensional image or three-dimensional image of the object within a scanning region.

For example, taking slice scanning as an example, in a case where the scanned object does not experience positional jitter, the collected projection data is as shown in Formula (1): $p \left(β, s\right) = {\int }_{- ∞}^{∞} {\int }_{- ∞}^{∞} μ \left(x, y\right) δ \left(x cos β+y sin β-s\right) dxdy$ where *p* is the projection data, *β* is the projection angle, *s* is the coordinate of the detector, and *µ*(*x*, *y*) is a linear attenuation coefficient distribution of the object and its internal space, i.e., *µ*(*x*, *y*) is used to generate a reconstructed CT image.

It should be noted that the projection angle *β* is the angle between a central line 12_{mid} of the fan beam and the positive direction of the X-axis.

The inventors found that in a case where the scanned object experiences jitter, the collected projection data is shown in Formulae (2) to (4): $p ′ \left(β, s\right) = {\int }_{- ∞}^{∞} {\int }_{- ∞}^{∞} μ \left(x′,y′\right) δ \left(x′ cos β+y′ sin β-s\right) dx ′ dy ′$ $x ′ = x + Δ x$ $y ′ = y + Δ y$ where Δ*x* and Δ*y* are respectively displacement components of points within the object along the x-axis and y-axis due to jitters. These jitters may arise from wind, mechanics, vibrations, human factors, etc., leading to errors or deviations in the projection data, which can distort the reconstructed CT image and affect defect detection in the object.

Accordingly, the present disclosure provides a CT image reconstruction solution that effectively corrects CT image distortion caused by object jitters.

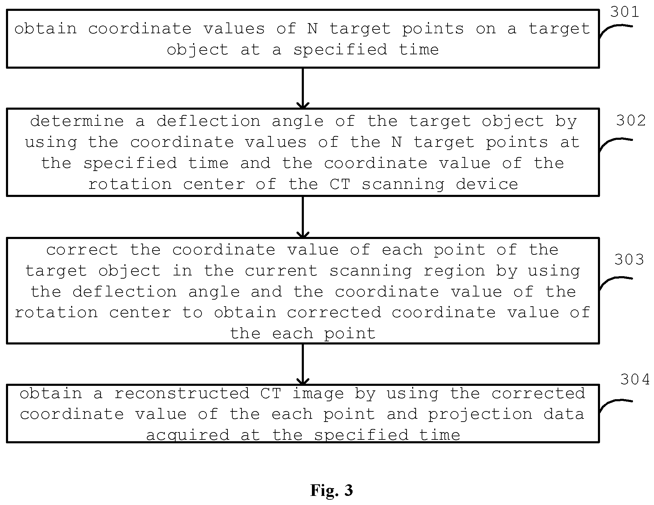

FIG. 3 is a flowchart of a CT image reconstruction method according to one embodiment of the present disclosure. In some embodiments, the following CT image reconstruction method is performed by a CT image reconstruction apparatus.

In step 301, coordinate values of N target points on a target object at a specified time are obtained, wherein N is a natural number greater than 1, and the target object is an object for CT scanning in a CT scanning device.

In some embodiments, position monitoring apparatus is used to obtain the coordinate values of the target points on the target object. For example, the coordinate value of the n-th target point of the N target points at the specified time may be determined by the coordinate value of the n-th position monitoring apparatus corresponding to the n-th target point, a distance between the n-th position monitoring apparatus and the n-th target point at the specified time, and an angle between a line connecting the n-th position monitoring apparatus and the n-th target point and the y-axis at the specified time, wherein the N target points and N position monitoring apparatuses correspond to each other on a one-to-one basis, and 1 ≤ n ≤ N. It should be noted that the position monitoring apparatus are usually fixed in the scanning channel of the CT scanning device. Therefore, for example, when the rotation center of the rotating bracket 3 of the CT scanning device is set as the origin of the coordinate system, the coordinate value of the position monitoring apparatus are known.

For instance, in a case where N is 2, the coordinate value of the first target point on the target object are obtained by using the first position monitoring apparatus, and the coordinate value of the second target point on the target object are obtained by using the second position monitoring apparatus. If it is set that a straight line on which the first position monitoring apparatus and the first target point are located is a first straight line, and a straight line on which the second position monitoring apparatus and the second target point are located is a second straight line, then the first straight line and the second straight line should have a certain angle between them to reconstruct a jitter condition in the entire two-dimensional plane by detecting jitters at the first target point and the second target point.

It should be noted that if the first straight line and the second straight line are approximately parallel, it is difficult to reconstruct two-dimensional coordinates, or the reconstruction results may have significant deviations. In some embodiments, the angle between the first straight line and the second straight line is around 90°.

In another example, in a case where N is 3, the coordinate value of the first target point on the target object are obtained by using the first position monitoring apparatus, the coordinate value of the second target point on the target object are obtained by using the second position monitoring apparatus, and the coordinate value of the third target point on the target object are obtained by using the third position monitoring apparatus. If it is set that a straight line on which the first position monitoring apparatus and the first target point are located is a first straight line, a straight line on which the second position monitoring apparatus and the second target point are located is a second straight line, and a straight line on which the third position monitoring apparatus and the third target point are located is a third straight line, in order to ensure every two straight lines among the first to third straight lines have a certain angle therebetween, an angle covered by the three position monitoring apparatuses is at least 180°.

It should also be noted that in a case where N is 1, the coordinate value of one target point on the target object are obtained by using one position monitoring apparatus. However, since a unique linear transformation cannot be calculated based on the coordinate value of one target point, at least two target points must be selected on the target object.

In some embodiments, contactless distance detection methods such as laser ranging, radar ranging, or ultrasonic ranging may be used to obtain a distance between the position monitoring apparatus and the target point at the specified time. Accordingly, the position monitoring apparatus may include a laser rangefinder, a radar rangefinder, an ultrasonic rangefinder, etc.

Additionally, it should be noted that in a case where multiple position monitoring apparatuses are fixed in the scanning channel of the CT scanning device, the installation position of each position monitoring apparatus should avoid the ray beam plane but should not be too far away therefrom. For example, a distance between the installation position of each position monitoring apparatus and the ray beam plane should be within a few centimeters. This ensures that measurement of each position monitoring apparatus does not affect X-ray based image collection while a jitter condition at the current scanning position can be effectively detected.

In some embodiments, the y-axis coordinate value of the coordinate value of the n-th target point at the specified time is a difference value between the y-axis coordinate value of the coordinate value of the n-th position monitoring apparatus and a first product, wherein the first product is a product of the distance and a cosine value of the angle.

In some embodiments, in a case where the x-axis coordinate value of the coordinate value of the n-th position monitoring apparatus is less than 0 or equal to 0, the x-axis coordinate value of the coordinate value of the n-th target point at the specified time is a sum value of the x-axis coordinate value of the coordinate value of the n-th position monitoring apparatus and a second product, wherein the second product is a product of the distance and a sine value of the angle.

In some embodiments, in a case where the x-axis coordinate value of the coordinate value of the n-th position monitoring apparatus is greater than 0 or equal to 0, the x-axis coordinate value of the coordinate value of the n-th target point at the specified time is a difference value between the x-axis coordinate value of the coordinate value of the n-th position monitoring apparatus and the second product.

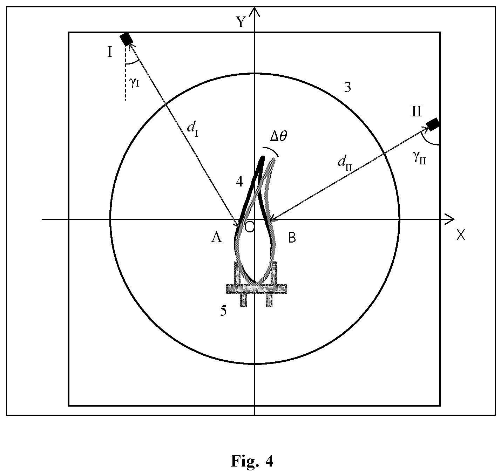

As shown in FIG. 4, in order to detect the jitter condition of the object, the position monitoring apparatus I and the position monitoring apparatus II are fixed in the CT scanning channel. To facilitate description, in FIG. 4, the rotation center of the rotating bracket 3 of the CT scanning device is set as the origin of the coordinate system, the x-axis coordinate value of the coordinate value of the position monitoring apparatus I is set as *x_{I}*, the y-axis coordinate value of the coordinate value of position monitoring apparatus I is set as *y_{I}*, the x-axis coordinate value of the coordinate value of the position monitoring apparatus II is set as *x_{II}*, and the y-axis coordinate value of the coordinate values of the position monitoring apparatus II is set as *y_{II}*. A distance between the position monitoring apparatus I and the target point A at a specified time is *d*_{I}(*t*), and an angle between a line connecting the position monitoring apparatus I and the target point A and the y-axis at the specified time is *γ*_{I}(*t*). A distance between the position monitoring apparatus II and the target point B at the specified time is *d*_{II}(*t*), and an angle between a line connecting the position monitoring apparatus II and the target point B and the y-axis at the specified time is *γ*_{II}(*t*). Thus, the coordinate value of the target point A at the specified time are as shown in Formula (5), and the coordinate value of target point B at the specified time are as shown in Formula (6). $\left({x}_{A}\left(t\right),{y}_{A}\left(t\right)\right) = \left({x}_{I}+{d}_{I}\left(t\right)⋅sin\left({γ}_{I}\left(t\right)\right),{y}_{I}-{d}_{I}\left(t\right)⋅cos\left({γ}_{I}\left(t\right)\right)\right)$ $\left({x}_{B}\left(t\right),{y}_{B}\left(t\right)\right) = \left({x}_{II}+{d}_{II}\left(t\right)⋅sin\left({γ}_{II}\left(t\right)\right),{y}_{II}-{d}_{II}\left(t\right)⋅cos\left({γ}_{II}\left(t\right)\right)\right)$ where (*x_{I}*, *y_{I}*) is the coordinate of the position monitoring apparatus I, and (*x_{II}*, *y_{II}*) is the coordinate of the position monitoring apparatus II.

In some embodiments, as shown in FIG. 4, an angle between a first straight line on which the position monitoring apparatus I and the target point A are located and a second straight line on which the position monitoring apparatus II and the target point B are located is approximately 90°.

In step 302, a deflection angle of the target object is determined by using the coordinate values of the N target points at the specified time and the coordinate value of the rotation center of the CT scanning device.

For example, as shown in FIG. 4, since the target object 4 has deflected, it moves from the black area to the gray area.

In some embodiments, in a case where N is equal to 2, the deflection angle of the target object is obtained by using the coordinate values of two target points on the target object at the specified time and the coordinate value of the rotation center.

In some embodiments, the deflection angle of the target object is an average value of a first angle parameter and a second angle parameter, wherein the first angle parameter is determined by the x-axis coordinate value and the y-axis coordinate value of the coordinate value of the first target point of the two target points at the specified time and the x-axis coordinate value and the y-axis coordinate value of the coordinate value of the rotation center, and the second angle parameter is determined by the x-axis coordinate value and the y-axis coordinate value of the coordinate value of the second target point of the two target points at the specified time and the x-axis coordinate value and y-axis coordinate value of the coordinate value of the rotation center.

In some embodiments, the first angle parameter is an arctangent function value of a ratio of the first difference value to the second difference value, wherein the first difference value is a difference value between the y-axis coordinate value of the coordinate value of the first target point at the specified time and the y-axis coordinate value of the coordinate value of the rotation center, and the second difference value is a difference value between the x-axis coordinate value of the coordinate value of the first target point at the specified time and the x-axis coordinate value of the coordinate value of the rotation center. The second angle parameter is an arctangent function value of a ratio of a third difference value to a fourth difference value, wherein the third difference value is a difference value between the y-axis coordinate value of the coordinate value of the second target point at the specified time and the y-axis coordinate value of the coordinate value of the rotation center, and the fourth difference value is a difference value between the x-axis coordinate value of the coordinate value of the second target point at the specified time and the x-axis coordinate value of the coordinate value of the rotation center.

For example, as shown in FIG. 4, there are two target points on the target object, namely, the target point A and the target point B, and a deflection angle Δ*θ* of the target object is as shown in Formula (7): $Δ θ = \left({tan}^{- 1}\frac{{y}_{A} \left(t\right) - {y}_{0}}{{x}_{A} \left(t\right) - {x}_{0}}+{tan}^{- 1}\frac{{y}_{B} \left(t\right) - {y}_{0}}{{x}_{B} \left(t\right) - {x}_{0}}\right) / 2$ where (*x_{A}*(*t*), *y_{A}*(*t*)) is the coordinate of the target point A at the specified time, (*x_{B}*(*t*), *y_{B}*(*t*)) is the coordinates of the target point B at the specified time, and (*x*₀, *y*₀) is the coordinate of the rotation center.

In some embodiments, in a case where N is greater than 2, K mutually distinct sets are generated from the N target points, wherein K is a natural number greater than 1, and each set of the sets includes two target points among the N target points. An i-th deflection angle is obtained by using the coordinate values of the two target points in the i-th set at the specified time and the coordinate value of the rotation center of the CT scanning device, where 1 ≤ *i* ≤ *K.* The deflection angle of the target object is then generated by using the obtained K deflection angles.

In some embodiments, the deflection angle of the target object is the average value of the K deflection angles or the median value of the K deflection angles.

In some embodiments, the i-th deflection angle is an average value of a third angle parameter and a fourth angle parameter, wherein the third angle parameter is determined by the x-axis coordinate value and the y-axis coordinate value of the coordinate value of the first target point in the i-th set at the specified time and the x-axis coordinate value and the y-axis coordinate value of the coordinate value of the rotation center, and the fourth angle parameter is determined by the x-axis coordinate value and the y-axis coordinate value of the coordinate value of the second target point in the i-th set at the specified time and the x-axis coordinate value and the y-axis coordinate value of the coordinate value of the rotation center.

In some embodiments, the third angle parameter is an arctangent function value of a ratio of a fifth difference value to a sixth difference value, wherein the fifth difference value is a difference value between the y-axis coordinate value of the coordinate value of the first target point at the specified time and the y-axis coordinate value of the coordinate value of the rotation center, and the sixth difference value is a difference value between the x-axis coordinate value of the coordinate value of the first target point at the specified time and the x-axis coordinate value of the coordinate value of the rotation center. The fourth angle parameter is an arctangent function value of a ratio of a seventh difference value to an eighth difference value, wherein the seventh difference value is a difference value between the y-axis coordinate value of the coordinate value of the second target point at the specified time and the y-axis coordinate value of the coordinate value of the rotation center, and the eighth difference value is a difference value between the x-axis coordinate value of the coordinate value of the second target point at the specified time and the x-axis coordinate value of the coordinate value of the rotation center.

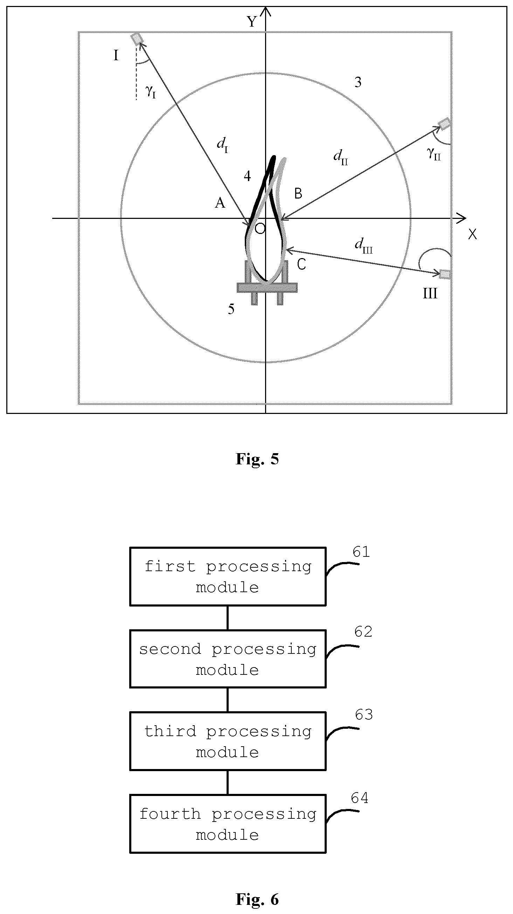

As shown in FIG. 5, there are three target points on the target object, namely, the target point A, the target point B, and the target point C. In this case, multiple distinct sets are generated from the three target points, such as a first set including the target points A and B, a second set including the target points A and C, and a third set including the target points B and C.

First, a first deflection angle Δ*θ_{AB}* obtained by using the first set is as shown in Formula (8): $Δ {θ}_{AB} = \left({tan}^{- 1}\frac{{y}_{A} \left(t\right) - {y}_{0}}{{x}_{A} \left(t\right) - {x}_{0}}+{tan}^{- 1}\frac{{y}_{B} \left(t\right) - {y}_{0}}{{x}_{B} \left(t\right) - {x}_{0}}\right) / 2$ where (*x_{A}*(*t*), *y_{A}*(*t*)) is the coordinate of the target point A at the specified time, (*x_{B}*(*t*), *y_{B}*(*t*)) is the coordinate of the target point B at the specified time, and (*x*₀, *y*₀) is the coordinate of the rotation center.

A second deflection angle Δ*θ_{AC}* obtained by using the second set is as shown in Formula (9): $Δ {θ}_{AC} = \left({tan}^{- 1}\frac{{y}_{A} \left(t\right) - {y}_{0}}{{x}_{A} \left(t\right) - {x}_{0}}+{tan}^{- 1}\frac{{y}_{C} \left(t\right) - {y}_{0}}{{x}_{C} \left(t\right) - {x}_{0}}\right) / 2$ where (*x_{C}*(*t*), *y_{C}*(*t*)) is the coordinate of the target point C at the specified time.

A third deflection angle Δ*θ_{BC}* obtained by using the third set is as shown in Formula (10): $Δ {θ}_{BC} = \left({tan}^{- 1}\frac{{y}_{B} \left(t\right) - {y}_{0}}{{x}_{B} \left(t\right) - {x}_{0}}+{tan}^{- 1}\frac{{y}_{C} \left(t\right) - {y}_{0}}{{x}_{C} \left(t\right) - {x}_{0}}\right) / 2$

It should be noted that since the object undergoes rigid rotation, theoretically Δ*θ_{AB}* = Δ*θ_{AC} =* Δ*θ_{BC}.* In this case, an average value or median value of the Δ*θ_{AB},* the *Δθ_{AC}* and the Δ*θ_{BC}* is used to represent an overall deflection angle of the object.

In some embodiments, in order to save computational costs, in a case where there are target points A, B, and C on the target object, any two of the deflection angles Δ*θ_{AB},* Δ*θ_{AC}* and Δ*θ_{AC}* are used only to calculate the overall deflection angle of the object. For example, only Δ*θ_{AB}* and Δ*θ_{AC}* are used to calculate the overall deflection angle of the object. In some embodiments, as shown in FIG. 5, a straight line on which the position monitoring apparatus I and the target point A are located is a first straight line, a straight line on which the position monitoring apparatus II and the target point B are located is a second straight line, and a straight line on which the position monitoring apparatus III and the target point C are located is a third straight line. To ensure that there is a certain angle between every two of the first to third straight lines, an angle covered by position monitoring apparatuses I, II, and III is at least 180°.

In some embodiments, as shown in FIG. 5, the target points A, B, and C lie in the same plane, a deflection angle in a two-dimensional scenario can be obtained through the above process. If target points A, B, and C lie in different planes, a deflection angle in a three-dimensional scenario can be obtained through the above process.

In step 303, the coordinate value of each point of the target object in the current scanning region are corrected by using the deflection angle and the coordinate value of the rotation center to obtain corrected coordinate value of the each point.

In some embodiments, the x-axis coordinate value of the corrected coordinate value of the each point is determined by a difference value between a first correction parameter and a second correction parameter, wherein the first correction parameter is determined by the x-axis coordinate value of the coordinate value of the each point, the x-axis coordinate value of the coordinate value of the rotation center, and a cosine value of the deflection angle, and the second correction parameter is determined by the y-axis coordinate value of the coordinate value of the each point, the y-axis coordinate value of the coordinate value of the rotation center, and a sine value of the deflection angle.

The y-axis coordinate value of the corrected coordinate value of the each point is determined by a sum value of a third correction parameter and a fourth correction parameter, wherein the third correction parameter is determined by the x-axis coordinate value of the coordinate value of the each point, the x-axis coordinate value of the coordinate value of the rotation center, and a sine value of the deflection angle, and the fourth correction parameter is determined by the y-axis coordinate value of the coordinate value of the each point, the y-axis coordinate value of the coordinate value of the rotation center, and a cosine value of the deflection angle.

In some embodiments, the first correction parameter is a product of a difference value between the x-axis coordinate value of the coordinate value of the each point and the x-axis coordinate value of the coordinate value of the rotation center and the cosine value of the deflection angle. The second correction parameter is a product of a difference value between the y-axis coordinate value of the coordinate value of the each point and the y-axis coordinate value of the coordinate value of the rotation center and the sine value of the deflection angle. The third correction parameter is a product of a difference value between the x-axis coordinate value of the coordinate value of the point and the x-axis coordinate value of the coordinate value of the rotation center and the sine value of the deflection angle. The fourth correction parameter is a product of a difference value between the y-axis coordinate value of the coordinate value of the point and the y-axis coordinate value of the coordinate value of the rotation center and the cosine value of the deflection angle.

For example, the coordinate of the each point in the current scanning region of the target object is (x,y), and the corrected coordinates (X,Y) is obtained by using Formula (11) and (12): $X = \left(x-{x}_{o}\right) cos \left(Δθ\right) - \left(y-{y}_{o}\right) sin \left(Δθ\right)$ $Y = \left(x-{x}_{o}\right) sin \left(Δθ\right) + \left(y-{y}_{o}\right) cos \left(Δθ\right)$

In step 304, a reconstructed CT image is obtained by using the corrected coordinate value of the each point and the projection data acquired at the specified time.

For example, the reconstructed CT image is obtained by using the corrected coordinates (X,Y) and the acquired projection data, as shown in Formula (13): $p ′ \left(β, s\right) = {\int }_{- ∞}^{∞} {\int }_{- ∞}^{∞} μ \left(X, Y\right) δ \left(X cos β+Y sin β-s\right) dXdY$

In some embodiments, analytical methods such as FBP (Filtered Backprojection) or FDK (Feldkamp-Davis-Kress), algebraic iterative methods such as ART (Algebraic Reconstruction Technique) or SIRT (Simultaneous Iterative Reconstruction Technique), or regularization methods such as TV (Total Variation) may be used for CT image reconstruction.

The CT image reconstruction method provided in the above embodiments of the present disclosure effectively addresses CT image distortion caused by object jitter by correcting positional jitter of the object.

FIG. 6 is a structural diagram of a CT image reconstruction apparatus according to one embodiment of this disclosure. As shown in FIG. 6, the CT image reconstruction apparatus includes a first processing module 61, a second processing module 62, a third processing module 63, and a fourth processing module 64.

The first processing module 61 is configured to obtain coordinate values of N target points on a target object at a specified time, wherein N is a natural number greater than 1, and the target object is an object for CT scanning in a CT scanning device.

In some embodiments, the coordinate value of the n-th target point of the N target points at the specified time is determined by the coordinate value of the n-th position monitoring apparatus corresponding to the n-th target point, a distance between the n-th position monitoring apparatus and the n-th target point at the specified time, and an angle between a line connecting the n-th position monitoring apparatus and the n-th target point and the y-axis at the specified time, wherein the N target points and N position monitoring apparatuses correspond to one another on a one-to-one basis, and 1 ≤ *n* ≤ *N.* It should be noted that the position monitoring apparatus is usually fixed in a scanning channel of the CT scanning device. Therefore, for example, when the rotation center of the rotating bracket 3 of the CT scanning device is set as the origin of the coordinate system, the coordinate value of the position monitoring apparatus are known.

It should be noted that contactless distance detection methods such as laser ranging, radar ranging, or ultrasonic ranging may be used to obtain a distance between the position monitoring apparatus and the target point at the specified time. Accordingly, the position monitoring apparatus may include a laser rangefinder, a radar rangefinder, an ultrasonic rangefinder, etc.

Additionally, it should also be noted that when multiple position monitoring apparatuses are fixed in the scanning channel of the CT scanning device, the installation position of the each position monitoring apparatus should avoid the ray beam plane but should not be too far away therefrom. For example, the distance between the installation position of the each position monitoring apparatus and the ray beam plane should be within a few centimeters. This ensures that measurement of each position monitoring apparatus does not affect X-ray based image acquisition while a jitter condition of a current scanning position can be effectively detected.

In some embodiments, the y-axis coordinate value of the n-th target point at the specified time is a difference value between the y-axis coordinate value of the coordinate value of the n-th position monitoring apparatus and a first product, wherein the first product is a product of the distance and the cosine value of the angle.

In some embodiments, in a case where the x-axis coordinate value of the coordinate value of the n-th position monitoring apparatus is less than 0 or equal to 0, the x-axis coordinate value of the coordinate value of the n-th target point at the specified time is a sum value of the x-axis coordinate value of the coordinate value of the n-th position monitoring apparatus and a second product, wherein the second product is a product of the distance and the sine value of the angle.

In some embodiments, in a case where the x-axis coordinate value of the coordinate value of the n-th position monitoring apparatus is greater than 0 or equal to 0, the x-axis coordinate value of the coordinate value of the n-th target point at the specified time is a difference value between the x-axis coordinate value of the coordinate value of the n-th position monitoring apparatus and the second product.

As shown in FIG. 4, in order to detect the jitter condition of the object, the position monitoring apparatus I and the position monitoring apparatus II are fixed in the CT scanning channel. To facilitate description, in FIG. 4, the rotation center of the rotating bracket 3 of the CT scanning device is set as the origin of the coordinate system, the x-axis coordinate value of the coordinate value of the position monitoring apparatus I is set as *x_{I}*, the y-axis coordinate value of the coordinate value of the position monitoring apparatus I is set as *y_{I}*, the x-axis coordinate value of the coordinate value of the position monitoring apparatus II is set as *x_{II}*, and the y-axis coordinate value of the coordinate value of the position monitoring apparatus II is set as *y_{II}*. The distance between the position monitoring apparatus I and the target point A at the specified time is *d*_{I}(*t*), and the angle between a line connecting the position monitoring apparatus I and the target point A and the y-axis at the specified time is *γ*_{I}(*t*). The distance between the position monitoring apparatus II and the target point B at the specified time is *d*_{II}(*t*)*,* and the angle between a line connecting the position monitoring apparatus II and the target point B and the y-axis at the specified time is *γ*_{II}(*t*). Thus, the coordinate value of the target point A at the specified time are as shown in Formula (5), and the coordinate value of the target point B at the specified time are as shown in Formula (6).

The second processing module 62 is configured to determine a deflection angle of the target object by using the coordinate values of N target points at a specified time and the coordinate value of the rotation center of the CT scanning device.

For example, as shown in FIG. 4, since the target object 4 has deflected, it moves from the black area to the gray area.

In some embodiments, in a case where N is equal to 2, the deflection angle of the target object is obtained by using the coordinate values of two target points on the target object at the specified time and the coordinate value of the rotation center.

In some embodiments, the deflection angle of the target object is an average value of a first angle parameter and a second angle parameter, wherein the first angle parameter is determined by the x-axis coordinate value and the y-axis coordinate value of the coordinate value of the first target point of the two target points at the specified time and the x-axis coordinate value and the y-axis coordinate value of the coordinate value of the rotation center, and the second angle parameter is determined by the x-axis coordinate value and the y-axis coordinate value of the coordinate value of the second target point of the two target points at the specified time and the x-axis coordinate value and the y-axis coordinate value of the coordinate value of the rotation center.

In some embodiments, the first angle parameter is an arctangent function value of a ratio of a first difference value to a second difference value, wherein the first difference value is a difference value between the y-axis coordinate value of the coordinate value of the first target point at the specified time and the y-axis coordinate value of the coordinate value of the rotation center, and the second difference value is a difference value between the x-axis coordinate value of the coordinate value of the first target point at the specified time and the x-axis coordinate value of the coordinate value of the rotation center. The second angle parameter is an arctangent function value of a ratio of a third difference value to a fourth difference value, wherein the third difference value is a difference value between the y-axis coordinate value of the coordinate value of the second target point at the specified time and the y-axis coordinate value of the coordinate value of the rotation center, and the fourth difference value is a difference value between the x-axis coordinate value of the coordinate value of the second target point at the specified time and the x-axis coordinate value of the coordinate value of the rotation center.

For example, as shown in FIG. 4, there are two target points on the target object, namely, the target point A and the target point B, and a deflection angle Δ*θ* of the target object is as shown in Formula (7).

In some embodiments, in a case where N is greater than 2, K mutually distinct sets are generated from N target points, wherein K is a natural number greater than 1, and each set of the sets includes two target points among the N target points. The i-th deflection angle is obtained by using the coordinate values of the two target points in the i-th set at the specified time and the coordinate value of the rotation center of the CT scanning device, wherein 1 ≤ *i* ≤ *K.* The deflection angle of the target object is then generated by using the obtained K deflection angles.

In some embodiments, the deflection angle of the target object is the average value of the K deflection angles or the median value of the K deflection angles.

In some embodiments, the i-th deflection angle is an average value of a third angle parameter and a fourth angle parameter, wherein the third angle parameter is determined by the x-axis coordinate value and the y-axis coordinate value of the coordinate value of the first target point in the i-th set at the specified time and the x-axis coordinate value and the y-axis coordinate value of the coordinate value of the rotation center, and the fourth angle parameter is determined by the x-axis coordinate value and the y-axis coordinate value of the coordinate value of the second target point in the i-th set at the specified time and the x-axis coordinate value and the y-axis coordinate value of the coordinate value of the rotation center.

In some embodiments, the third angle parameter is an arctangent function value of a ratio of a fifth difference value to a sixth difference value, wherein the fifth difference value is a difference value between the y-axis coordinate value of the coordinate value of the first target point at the specified time and the y-axis coordinate value of the coordinate value of the rotation center, and the sixth difference value is a difference value between the x-axis coordinate value of the coordinate value of the first target point at the specified time and the x-axis coordinate value of the coordinate value of the rotation center. The fourth angle parameter is an arctangent function value of a ratio of a seventh difference value to an eighth difference value, wherein the seventh difference value is a difference value between the y-axis coordinate value of the coordinate value of the second target point at the specified time and the y-axis coordinate value of the coordinate value of the rotation center, and the eighth difference value is a difference value between the x-axis coordinate value of the coordinate value of the second target point at the specified time and the x-axis coordinate value of the coordinate value of the rotation center.

As shown in FIG. 5, there are three target points on the target object, namely, the target point A, the target point B, and the target point C. In this case, multiple distinct sets are generated from the three target points, such as a first set including the target points A and B, a second set including the target points A and C, and a third set including the target points B and C.

First, a first deflection angle Δ*θ_{AB}* obtained by using the first set is as shown in Formula (8).

A second deflection angle Δ*θ_{AC}* obtained by using the second set is as shown in Formula (9).

A first deflection angle Δ*θ_{BC}* obtained by using the third set is as shown in Formula (10).

It should be noted that since the object undergoes rigid rotation, theoretically Δ*θ_{AB} =* Δ*θ_{AC} =* Δ*θ_{BC}.* In this case, an average value or median value of the Δ*θ_{AB},* the Δ*θ_{AC}* and the Δ*θ_{BC}* is used to represent an overall deflection angle of the object.

In some embodiments, in order to save computational costs, when there are target points A, B, and C on the target object, any two of the deflection angles the Δ*θ_{AB},* the Δ*θ_{AC}* and the Δ*θ_{BC}* are used only to calculate the overall deflection angle of the object. For example, only the Δ*θ_{AB}* and the Δ*θ_{AC}* are used to calculate the overall deflection angle of the object.

The third processing module 63 is configured to correct the coordinate value of each point in the current scanning region of the target object by using the deflection angle and the coordinate value of the rotation center to obtain corrected coordinate values for each point.

In some embodiments, the x-axis coordinate value of the corrected coordinate value of the each point is determined by a difference value between a first correction parameter and a second correction parameter, wherein the first correction parameter is determined by the x-axis coordinate value of the coordinate value of the each point, the x-axis coordinate value of the coordinate value of the rotation center, and the cosine value of the deflection angle, and the second correction parameter is determined by the y-axis coordinate value of the coordinate value of the point, the y-axis coordinate value of the coordinate value of the rotation center, and the sine valude of the deflection angle.

The y-axis coordinate value of the corrected coordinate value of the each point is determined by a sum value of a third correction parameter and a fourth correction parameter, wherein the third correction parameter is determined by the x-axis coordinate value of the coordinate value of the each point, the x-axis coordinate value of the coordinate value of the rotation center, and the sine value of the deflection angle, and the fourth correction parameter is determined by the y-axis coordinate value of the coordinate value of the each point, the y-axis coordinate value of the coordinate value of the rotation center, and the cosine value of the deflection angle.

In some embodiments, the first correction parameter is a product of a difference value between the x-axis coordinate value of the coordinate value of the each point and the x-axis coordinate value of the coordinate value of the rotation center and the cosine value of the deflection angle. The second correction parameter is a product of a difference value between the y-axis coordinate value of the coordinate value of the each point and the y-axis coordinate value of the coordinate value of the rotation center and the sine value of the deflection angle. The third correction parameter is a product of a difference value between the x-axis coordinate value of the coordinate value of the each point and the x-axis coordinate value of the coordinate value of the rotation center and the sine value of the deflection angle. The fourth correction parameter is a product of a difference value between the y-axis coordinate value of the coordinate value of the each point and the y-axis coordinate value of the coordinate value of the rotation center and the cosine value of the deflection angle.

For example, the coordinate of each point in the current scanning region of the target object is (*x*,*y*), and the corrected coordinate (X,Y) for each point are obtained using Formulae (11) and (12).

The fourth processing module 64 is configured to obtain a reconstructed CT image by using the corrected coordinate value of each point and the projection data acquired at the specified time.

For example, a reconstructed CT image is obtained by using the corrected coordinates (X,Y) and the acquired projection data, as shown in Formula (13).

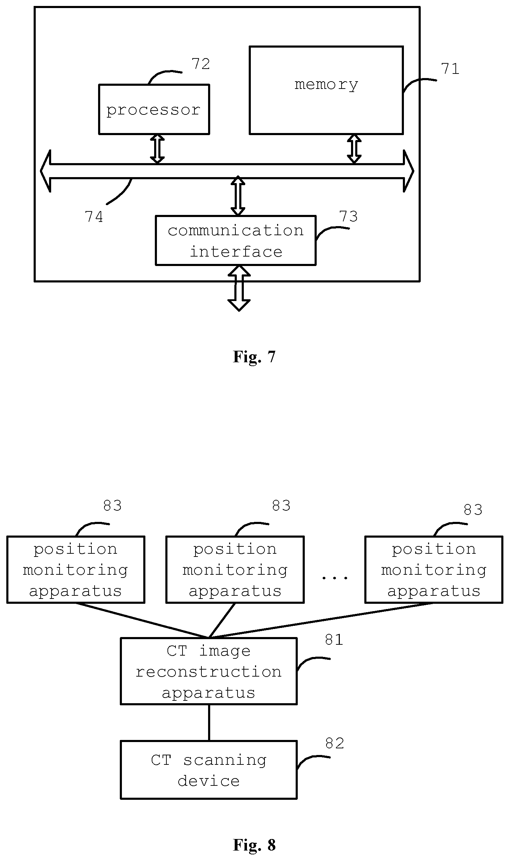

FIG. 7 is a structural diagram of a CT image reconstruction apparatus according to another embodiment of this disclosure. As shown in FIG. 7, the CT image reconstruction apparatus includes a memory 71 and a processor 72.

The memory 71 is configured to store instructions, and the processor 72 is coupled to the memory 71 and configured to execute instructions stored in the memory 71 to implement the method described in any of the embodiments related to FIG. 3.

As shown in FIG. 7, the CT image reconstruction apparatus further includes a communication interface 73 for communicating information with other devices. Additionally, the CT image reconstruction apparatus further includes a bus 74, through which the processor 72, the communication interface 73, and memory 71 communicate with one another.

The memory 71 may include high-speed RAM and may also include non-volatile memory, such as at least one disk storage device. The memory 71 may also be a memory array. The memory 71 may be partitioned, and the partitions may form virtual volumes according to certain rules.

Furthermore, the processor 72 may be a central processing unit (CPU), an application-specific integrated circuit (ASIC), or one or more integrated circuits configured to implement the embodiments of this disclosure.

The present disclosure also relates to a computer-readable storage medium storing computer instructions that, when executed by a processor, implement the method described in any of the embodiments related to FIG. 3.

The present disclosure also provides a computer program product, including computer instructions that, when executed by a processor, implement the method described in any of the embodiments related to FIG. 3.

FIG. 8 is a structural diagram of a CT image reconstruction system according to an embodiment of the present disclosure. As shown in FIG. 8, the CT image reconstruction system includes a CT image reconstruction apparatus 81, a CT scanning device 82, and N position monitoring apparatuses 83 corresponding on a one-to-one basis to N target points on the target object, wherein N is a natural number greater than 1. The CT image reconstruction apparatus 81 is a CT image reconstruction apparatus described in any of the embodiments related to FIG. 6 or FIG. 7.

The CT scanning device 82 is configured to perform CT scanning on the target object to acquire the projection data, and send the projection data to the CT image reconstruction apparatus 81.

Each of the N position monitoring apparatuses 83 is configured to detect a distance between the each position monitoring apparatus and the corresponding target point at a specified time, as well as an angle between a line connecting each position monitoring apparatus and the corresponding target point and the y-axis.

For example, the N position monitoring apparatuses 83 are fixed in a CT scanning channel.

By implementing the above embodiments of this disclosure, the problem of CT image distortion caused by object jitter can be effectively corrected.

In some embodiments, the functional units described above may be implemented as general-purpose processors, Programmable Logic Controllers (PLCs), Digital Signal Processors (DSPs), Application-Specific Integrated Circuits (ASICs), field-Programmable Gate Arrays (FPGAs), or other programmable logic devices, discrete gate or transistor logic devices, discrete hardware components, or any suitable combination thereof for performing the functions described in this disclosure.

Those of ordinary skill in the art may understand that all or part of the steps in the above embodiments may be performed by hardware or by a program instructing relevant hardware. The program may be stored in a computer-readable storage medium, which may be a read-only memory, a magnetic disk, or an optical disk.

The description of this disclosure is provided for purposes of illustration and description and is not intended to be exhaustive or to limit the disclosure to the disclosed form. Many modifications and variations will be apparent to those of ordinary skill in the art. The embodiments are chosen and described to best explain the principles and practical applications of this disclosure, enabling those of ordinary skill in the art to understand the disclosure and design various embodiments with various modifications suitable for specific uses.

## Claims

1. A CT image reconstruction method, comprising:
obtaining coordinate values of N target points on a target object at a specified time, wherein N is a natural number greater than 1, and the target object is an object for CT scanning in a CT scanning device;
determining a deflection angle of the target object by using the coordinate values of the N target points at the specified time and a coordinate value of a rotation center of the CT scanning device;
correcting a coordinate value of each point on the target object in a current scanning region by using the deflection angle and the coordinate value of the rotation center to obtain corrected coordinate value of the each point; and
obtaining a reconstructed CT image by using the corrected coordinate value of the each point and projection data acquired at the specified time.

2. The CT image reconstruction method according to claim 1, wherein the determining the deflection angle of the target object comprises:
obtaining the deflection angle of the target object by using coordinate values of two target points on the target object at the specified time and the coordinate value of the rotation center in a case where N is equal to 2.

3. The CT image reconstruction method according to claim 2, wherein
the deflection angle of the target object is an average value of a first angle parameter and a second angle parameter, wherein the first angle parameter is determined by an x-axis coordinate value and a y-axis coordinate value of a coordinate value of a first target point of the two target points at the specified time and an x-axis coordinate value and a y-axis coordinate value of the coordinate value of the rotation center, and the second angle parameter is determined by an x-axis coordinate value and a y-axis coordinate value of a coordinate value of a second target point of the two target points at the specified time and the x-axis coordinate value and the y-axis coordinate value of the coordinate value of the rotation center.

4. The CT image reconstruction method according to claim 3, wherein:
the first angle parameter is an arctangent function value of a ratio of a first difference value to a second difference value, wherein the first difference value is a difference value between the y-axis coordinate value of the coordinate value of the first target point at the specified time and the y-axis coordinate value of the coordinate value of the rotation center, and the second difference value is a difference value between the x-axis coordinate value of the coordinate value of the first target point at the specified time and the x-axis coordinate value of the coordinate value of the rotation center; and
the second angle parameter is an arctangent function value of a ratio of a third difference value to a fourth difference value, wherein the third difference value is a difference value between the y-axis coordinate value of the coordinate value of the second target point at the specified time and the y-axis coordinate value of the coordinate value of the rotation center, and the fourth difference value is a difference value between the x-axis coordinate value of the coordinate value of the second target point at the specified time and the x-axis coordinate value of the coordinate value of the rotation center.

5. The CT image reconstruction method according to claim 1, wherein the determining the deflection angle of the target object comprises:
generating K mutually distinct sets from the N target points in a case where N is greater than 2, wherein K is a natural number greater than 1, and each set comprises two target points among the N target points;
obtaining an i-th deflection angle by using coordinate values of two target points in an i-th set at the specified time and the coordinate value of the rotation center of the CT scanning device, where 1 ≤ i ≤ K; and
generating the deflection angle of the target object by using obtained K deflection angles.

6. The CT image reconstruction method according to claim 5, wherein
the i-th deflection angle is an average value of a third angle parameter and a fourth angle parameter, wherein the third angle parameter is determined by an x-axis coordinate value and a y-axis coordinate value of a coordinate value of a first target point in the i-th set at the specified time and an x-axis coordinate value and a y-axis coordinate value of the coordinate value of the rotation center, and the fourth angle parameter is determined by an x-axis coordinate value and a y-axis coordinate value of a coordinate value of a second target point in the i-th set at the specified time and the x-axis coordinate value and the y-axis coordinate value of the coordinate value of the rotation center.

7. The CT image reconstruction method according to claim 6, wherein:
the third angle parameter is an arctangent function value of a ratio of a fifth difference value to a sixth difference value, wherein the fifth difference value is a difference value between the y-axis coordinate value of the coordinate value of the first target point at the specified time and the y-axis coordinate value of the coordinate value of the rotation center, and the sixth difference value is a difference value between the x-axis coordinate value of the coordinate value of the first target point at the specified time and the x-axis coordinate value of the coordinate value of the rotation center; and
the fourth angle parameter is an arctangent function value of a ratio of a seventh difference value to an eighth difference value, wherein the seventh difference value is a difference value between the y-axis coordinate value of the coordinate value of the second target point at the specified time and the y-axis coordinate value of the coordinate value of the rotation center, and the eighth difference value is a difference value between the x-axis coordinate value of the coordinate value of the second target point at the specified time and the x-axis coordinate value of the coordinate value of the rotation center.

8. The CT image reconstruction method according to claim 5, wherein
the deflection angle of the target object is an average value of the K deflection angles, or a median value of the K deflection angles.

9. The CT image reconstruction method according to claim 1, wherein:
an x-axis coordinate value of the corrected coordinate value of the each point is determined by a difference value between a first correction parameter and a second correction parameter, wherein the first correction parameter is determined by an x-axis coordinate value of the coordinate value of the each point, an x-axis coordinate value of the coordinate value of the rotation center and a cosine value of the deflection angle, and the second correction parameter is determined by a y-axis coordinate value of the coordinate value of the each point, a y-axis coordinate value of the coordinate value of the rotation center and a sine value of the deflection angle; and
a y-axis coordinate value of the corrected coordinate value of the each point is determined by a sum value of a third correction parameter and a fourth correction parameter, wherein the third correction parameter is determined by the x-axis coordinate value of the coordinate value of the each point, the x-axis coordinate value of the coordinate value of the rotation center and the sine value of the deflection angle, and the fourth correction parameter is determined by the y-axis coordinate value of the coordinate value of the each point, the y-axis coordinate value of the coordinate value of the rotation center and the cosine value of the deflection angle.

10. The CT image reconstruction method according to claim 9, wherein:
the first correction parameter is a product value of a difference value between the x-axis coordinate value of the coordinate value of the each point and the x-axis coordinate value of the coordinate value of the rotation center and the cosine value of the deflection angle;
the second correction parameter is a product value of a difference value between the y-axis coordinate value of the coordinate value of the each point and the y-axis coordinate value of the coordinate value of the rotation center and the sine value of the deflection angle;
the third correction parameter is a product value of the difference value between the x-axis coordinate value of the coordinate value of the each point and the x-axis coordinate value of the coordinate value of the rotation center and the sine value of the deflection angle; and
the fourth correction parameter is a product value of the difference value between the y-axis coordinate value of the coordinate value of the each point and the y-axis coordinate value of the coordinate value of the rotation center and the cosine value of the deflection angle.

11. The CT image reconstruction method according to any one of claims 1 to 10, wherein
a coordinate value of an n-th target point of the N target points at the specified time are determined by a coordinate value of an n-th position monitoring apparatus corresponding to the n-th target point, a distance between the n-th position monitoring apparatus and the n-th target point at the specified time, and an angle between a line connecting the n-th position monitoring apparatus and the n-th target point and a y-axis at the specified time, wherein there is a one-to-one correspondence between the N target points and N position monitoring apparaturs, and 1 ≤ n ≤ N.

12. The CT image reconstruction method according to claim 11, wherein
a y-axis coordinate value of the coordinate value of the n-th target point at the specified time is a difference value between a y-axis coordinate value of the coordinate value of the n-th position monitoring apparatus and a first product, wherein the first product being a product of the distance and a cosine value of the angle.

13. The CT image reconstruction method according to claim 12, wherein
an x-axis coordinate value of the coordinate value of the n-th target point at the specified time is a sum value of an x-axis coordinate value of the coordinate value of the n-th position monitoring apparatus and a second product in a case where the x-axis coordinate value of the coordinate value of the n-th position monitoring apparatus is less than 0 or equal to 0, wherein the second product value being a product value of the distance and a sine value of the angle.

14. The CT image reconstruction method according to claim 13, wherein
the x-axis coordinate value of the coordinate value of the n-th target point at the specified time is a difference value between the x-axis coordinate value of the coordinate value of the n-th position monitoring apparatus and the second product in a case where the x-axis coordinate value of the coordinate value of the n-th position monitoring apparatus is greater than 0 or equal to 0.

15. A CT image reconstruction apparatus, comprising:
a first processing module configured to obtain coordinate values of N target points on a target object at a specified time, wherein N is a natural number greater than 1, and the target object is an object for CT scanning in a CT scanning device;
a second processing module configured to determine a deflection angle of the target object by using the coordinate values of the N target points at the specified time and a coordinate value of a rotation center of the CT scanning device;
a third processing module configured to correct a coordinate value of each point on the target object in a current scanning region by using the deflection angle and the coordinate value of the rotation center to obtain corrected coordinate value of the each point; and
a fourth processing module configured to obtain a reconstructed CT image by using the corrected coordinate value of the each point and projection data acquired at the specified time.

16. A CT image reconstruction apparatus, comprising:
a processor; and
a memory coupled to the processor, storing program instructions which, when executed by the processor, cause the processor to execute the CT image reconstruction method according to any one of claims 1 to 14.

17. A CT image reconstruction system, comprising:
the CT image reconstruction apparatus according to claim 15 or 16;
a CT scanning device configured to perform CT scanning on a target object to acquire projection data, and send the projection data to the CT image reconstruction apparatus; and
N position monitoring apparatuses one-to-one corresponding to N target points on the target object, wherein N is a natural number greater than 1, and each position monitoring apparatus is configured to detect a distance between the each position monitoring apparatus and a corresponding target point at a specified time and an angle between a line connecting the each position monitoring apparatus and the corresponding target point and a y-axis.

18. A computer-readable storage medium, which stores computer instructions that, when executed by a processor, implement the CT image reconstruction method according to any one of claims 1 to 14.

19. A computer program product, comprising computer instructions that, when executed by a processor, implement the CT image reconstruction method according to any one of claims 1 to 14.

20. A computer program, comprising computer instructions that, when executed by a processor, implement the CT image reconstruction method according to any one of claims 1 to 14.
